# EUROPEAN PATENT APPLICATION

(11) **EP 3 281 974 A1**
(43) Date of publication of application: **14.02.2018**
(21) Application number: 16183804.0
(22) Date of filing: 11.08.2016
(51) Int. Cl.: C08K 3/22, B41M 5/26, C08K 5/053

(54) **LASER MARKING ADDITIVE**

(71) Applicant: Innocabs B.V., 6163 HG Geleen (NL)
(72) Inventor: VAN KESSEL, I. T. I. P., 6163 HG Geleen (NL)
(74) Representative: Renkema, Jaap

(57) **Abstract**

The invention is directed to a laser marking additive comprising:
a. A metal oxide comprising Sb,
b. A polyol and
c. A polymeric material chosen from the group of polyamides and polyesters.

The metal oxide preferably is selected from Sb2O3 or antimony doped tin oxide. The laser marking additive excels in fast laser response and excellent contrast after laser marking.

## Description

The invention is directed to a laser marking additive, a laser markable composition comprising the laser marking additive and to the use of a laser markable composition for the preparation of articles that can be marked by treating the article with laser light.

Laser marking additives are known and are described in the prior art.
Laser marking additives can be added to various matrix polymers to be able to leave a mark on an article made from the matrix polymer by after treating the article with laser light.
Laser marking additives preferably are employed in very small amounts and have no or a very light own color.

The use of laser marking additives based on antimony and bismuth is well known.
Such laser marking additives are described, for example in WO20010719, WO2004050766, WO2005047009 and WO2009003976.
In WO20010719 is described that antimony trioxide is applied as a light-absorbing additive. The additive is applied in an amount of at least 0.1 wt% in polymeric compositions to be able to apply a dark marking against a light background. WO2004050766 describes a laser light absorbing additive comprising particles that contain at least a first polymer with a first functional group and 0-95 wt% of an absorber. The absorber is for example antimony trioxide. The particles are microspheres, containing a core and a shell.
WO2005047009 describes a laser marking particulate additive comprising antimony tin oxide nanoparticles.
In WO2009003976 microspheric laser marking additives are described. The microspheres comprise a core and a shell, in which the core comprises a polymer and at least two laser light absorbers. The laser light absorbers are preferably antimony trioxide and antimony-tin oxide.
The particles described in WO2005047009 and the microspheres described in WO2004050766 and WO2009003976 have proven to provide a better resolution and contrast by laser irradiation than the composition disclosed in WO20010719. However, the contrast obtained with these particles and microspheres, especially at (very) high marking speeds is still relatively low. Moreover, high contrast is mainly obtained while marking with high laser pulse energies. Marking should therefore preferably be performed in focus of the laser beam which limits the marking area per pulse and hence increases marking time.

The object of the present invention is to find a laser marking additive which enables high-contrast marking on exposure to laser light, contains only small amounts of heavy metals and improves the contrast and the resolution at low and high marking speeds.

The object of the invention is achieved by a laser marking additive comprising:
a. A metal oxide comprising antimony (Sb),
b. A polyol and
c. A polymeric material

The laser marking additive according to the invention has the advantages that increased response to laser is obtained, generating deeper colored markings or markings can be made with higher laser speeds and/or less laser power or lower laser frequencies; furthermore the laser marking additive can be either used as an additive to a matrix polymer or can be transformed into a masterbatch which can be added to the matrix polymer.
The laser marking additive according to the invention further has the advantage that no carrier material is needed and only one processing step is required to obtain the laser marking additive.

### Metal oxide

The laser marking additive comprises a metal oxide comprising antimony (Sb). The metal oxide is able to absorb laser light.
Preferably, the light-absorbing metal oxide comprising Sb is antimony-trioxide (Sb₂O₃) or antimony-doped tin oxide.

### Polyol

The laser marking additive comprises a polyol. Without wanting to be bound by any theory, it is believed that the polyol carbonizes during irradiation of the laser marking additive and improves the laser marking of a matrix material. A polyol is a compound comprising two or more hydroxyl (-OH) groups. Examples of polyols are butyl ethyl propanediol, hexanediol, methyl propanediol, neopentyl glycol, trimethylpentanediol, trimethylolpropane, glycerine, di-trimethylolpropane, pentaerythritol, di-pentaerythritol, difunctional propoxylated polyol, trifunctional ethoxylated polyol, tetrafunctional ethoxylated polyol, dimethylolpropionic acid, trimethyolpropane monoallyl ether, monoethylene glycol, diethyleneglycol and polyethylene glycol.
Preferably, the polyol is chosen from monoethyleneglycol, diethyleneglycol, polyethylene glycol (PEG) or an alcohol comprising 3 or more hydroxyl groups. More preferably, the alcohol comprising 3 or more hydroxyl groups is a branched alcohol. Most preferably, the polyol can be chosen from the group consisting of pentaerythritol, dipentaerythritol, 1,1,1-tris(hydroxymethyl) ethane, monoethyleneglycol, diethyleneglycol and polyethyleneglycol (PEG).
PEG preferably has a weight average molecular weight (Mw) of 200-10,000, more preferably of 300-9,500. In general a lower molecular weight PEG is more reactive compared to a higher molecular weight PEG.
The amount of polyol in the laser marking additive ranges between 99.99 and 0.01 wt%, relative to the total of the laser marking additive, preferably between 99 and 1 wt%.

The laser marking additive can be added directly to a matrix polymer, or can be formed into a master batch. The masterbatch can be added to a matrix polymer. The combination of the matrix polymer with the laser marking additive is a laser markable composition. Mixing of the laser marking additive and a matrix polymer can be performed in different ways. A preferred way is to extrude the matrix polymer with the laser marking additive. The metal oxide, the polyol and the polymeric material can be added directly (and independently) to the extruder while also feeding the matrix polymer to the extruder, and together be extruded into an article.
The metal oxide, polyol and polymeric material can also first be mixed together and as a mixture be added to a matrix polymer in (for example) an extruder.
Also the metal oxide, polyol and polymeric material can be added to a carrier polymer in an extruder to make a masterbatch which can be blended in a next step with a matrix material to make a laser markable composition.
It is possible that the amount of light absorbing metal oxide comprising Sb is as low as 500 ppm in the laser markable composition to obtain good resolution, or even as low as 250 ppm.

Preferably, the amount of light absorbing metal oxide in a laser markable composition is between 0.05 to 2 wt%, based on the total weight of the composition. This gives good laser-marking performance while retaining the mechanical properties of the laser marking composition.

### Polymeric material

The laser marking additive further comprises a polymeric material. Examples of suitable polymeric materials are chosen from the group of polyamides, polyesters acrylates, acrylate copolymers and styrenics.
Polyamides (PA) include homo- and copolymers of amides. Examples of polyamides PA66, PA11, PA12, PA410, PA610 and PA46.
A polyester is a polymer containing an ester functional group in their main chain. Polyesters can be homopolymers or copolymers. Examples of polyesters are polyethylene terephthalate (PET), polybutylene terephthalate (PBT) and polyethylene naphthalate (PEN).
Examples of acrylate polymers are polymethyl acrylate (PMA), polymethyl methacrylate (PMMA) and polyethylene methacrylate (EMA). An example of an acrylate polymer is polyethylenevinylacetate (EVA).
Preferably, the polymeric material is a polyamide, polyethylenemethylacrylate (EMA), polyethylenevinylacetate (EVA) or polybutyleneterephthalate (PBT).
Preferred polymeric materials are low melting materials, preferably having a melting point below 130 °C, more preferably between 40 and 120 °C.

### Composition

The invention is further directed to a laser markable composition comprising
95-99.9 wt% of a matrix polymer and 0.1-5 wt% of the laser marking additive, based on the total weight of the laser markable composition. The laser markable composition can be prepared by mixing the laser marking composition with the matrix polymer, for example, in an extruder.
The matrix polymer can be any type of polymer such as plastics, binders and resins. Suitable matrix polymers are thermoplastic and thermosetting plastics such as polyethylene (PE), polypropylene (PP), polyamide (PA), polyester, polyether, polyphenylene ether, polyacrylate, polyurethane (PU), polyoxymethylene (POM), polymethacrylate, polymethylmethacrylate (PMMA), polyvinyl acetate (PVAC), polystyrene (PS), acrylonitrile-butadiene-styrene (ABS), acrylonitrile-styrene-acrylate (ASA), ABS graft polymer, polybutylene terephthalate (PBT), polyethylene terephthalate (PET), polyvinyl chloride (PVC), polyvinylidene chloride (PVDC), polyvinylidene fluoride (PVDF), polytetrafluoroethylene (PTFE), polycarbonate (PC), polyether sulfones, polyether ketone, thermopolymer polyurethane (TPU), thermopolymer elastomers (TPE), epoxy resin (EP), silicon resin (SI), unsaturated polyester resin (UP), phenolic formaldehyde resin (PF), urea formaldehyde resin (UF), melamine resin (MF) and copolymers thereof and/or mixtures thereof. The polymer can also be a copolymer or block copolymer.
Preferably, the matrix polymer is a polyolefin, more preferably ethylene or propylene homo- or copolymers.
Conventional and suitable additives may be present in the matrix polymer.
In the laser markable composition 95-99.9 wt% of a matrix polymer based on the total weight of the laser markable composition, can be present, preferably, 96-99 wt%, more preferably 97-98 wt%.
In the laser markable composition 0.1-5 wt% of the laser marking additive, based on the total weight of the laser markable composition, can be present, preferably, 0.3-4 wt%, more preferably 0.5-3 wt%.
The amount of metal oxide in the laser markable composition preferably ranges between 0.01 wt% to 5 wt%, more preferably between 0.05 wt% to 3 wt%, or between 0.1 and 1 wt%.

### Use

The invention is further directed to the use of a laser markable composition for the preparation of articles that can be marked by treating the article with laser light.

### Article

The invention is further directed to an article or part of an article comprising a laser markable composition.The laser markable compositions according to the present invention can, for example, be used in any sector where conventional printing processes have hitherto been used to inscribe or mark matrix polymers. Almost any plastic article or part of an article can be obtained in a laser markable or laser writable form. Any kind of article made of a matrix polymer can be provided with functional data, barcodes, logos, graphics, pictures and identification codes. Furthermore, they can find application in the
- medical equipment such as tubes, containers for tissue samples or fluids, syringes, pots, covers, catheters,
- automotive business such as fluid containers, cabling, components,
- telecom and E&E fields such as GSM fronts, keyboards, micro circuit breakers,
- security and identification applications such as credit cards, identification cards, animal identification tags, labels, security straps,
- advertising applications such as logos, decoration on corks, golf balls, promotional articles, - packaging such as mono- and multilayer films, bottles, caps and closures including but not limited to screw caps for bottles, tamper proof caps and synthetic corks. For example, articles made from the laser markable composition of the invention may be used in the electrical industry, electronic industry or motor vehicle industry. With the aid of laser light, it is possible to produce identification markings or inscription markings even at locations to which it is difficult to gain access, for example, on cables, lines, decorative strips, or functional parts in the heating, ventilation or cooling sector, or on switches, plugs, levers or handles which consist of the plastics of the invention. It is also possible for the polymer system of the invention to be used for packaging in the food and drinks sector, or in the toy sector. The markings on the packaging are wipe- and scratch-resistant, resistant to downstream sterilization processes, and can be applied by the marking process in a manner which is hygienically clean. Complete label motifs can be applied durably to the packaging for a reusable system. Another important application sector for laser inscription is that of the marking of plastics to produce individual identification marking for animals, known as cattle tags or ear tags. The information specifically associated with the animal is stored via a barcode system. It can be called up again when required with the aid of a scanner. The inscription must be highly durable since some tags remain on the animals for a number of years.

### Laser marking

The invention is further directed to the laser marking of an article comprising the laser markable composition as described above, wherein parts of the laser markable composition are treated with light from a laser.
The laser marking additive is capable of absorbing laser light of a certain wavelength. In practice this wavelength lies between 157 nm and 10600nm, the customary wavelength range of lasers. If lasers with larger or smaller wavelengths become available, other absorbers may also be considered for application in the additive according to the invention. Examples of such lasers working in the said area are CO₂ lasers (10.6 micrometer), Nd:YAG lasers (1064, 532, 355, 266 nm) vanadat-and excimer lasers of the following wavelengths: F₂ (157 nm), ArF (193 nm), KrCl (222 nm), KrF (248 nm), XeCI (308 nm) and XeF (351 nm), FAYb fiber lasers, diode lasers and diode array lasers. Preferably Nd:YAG(1064 or 532 nm) lasers and CO₂ lasers are used since these types work in a wavelength range which is very suitable for the induction of thermal processes that are applied for marking purposes.
The energy densities of the lasers used are generally within the range from 0.3 mJ/cm² to 50 J/cm², preferably from 0.3 mJ/cm² to 10 J/cm².
When pulsed lasers are used, the pulse frequency is generally within the range from 1 to 150 kHz. Corresponding lasers which can be used in the process of the invention are commercially available. The inscription with the laser is preferably carried out by introducing the article into the ray path of a a CO₂ laser (10.6 µm) or a pulsed laser, preferably of an NdiYAG laser.
It is noted that the invention relates to all possible combinations of features described herein, preferred in particular are those combinations of features that are present in the claims. It will therefore be appreciated that all combinations of features relating to the composition according to the invention; all combinations of features relating to the process according to the invention and all combinations of features relating to the composition according to the invention and features relating to the process according to the invention are described herein.

It is further noted that the term 'comprising' does not exclude the presence of other elements. However, it is also to be understood that a description on a product/composition comprising certain components also discloses a product/composition consisting of these components. The product/composition consisting of these components may be advantageous in that it offers a simpler, more economical process for the preparation of the product/composition. Similarly, it is also to be understood that a description on a process comprising certain steps also discloses a process consisting of these steps. The process consisting of these steps may be advantageous in that it offers a simpler, more economical process.

The invention is now elucidated by way of the following examples, without however being limited thereto.

### EXAMPLES

### Materials:

### Metal oxide

01: Antimony oxide (Sb₂O₃)

### Antimony-doped tin oxide:

O2: Stanostat® CP5L of Keeling & Walker
O3: Stanostat® CP5R of Keeling & Walker
O4: Stanostat® CP8C of Keeling & Walker
O5: Stanostat® CP150C of Keeling & Walker
06: Stanostat® Cp5C of Keeling & Walker

### Polyol

B1: Dipentaerythritol of Sigma Aldrich
B2: Pentaerythritol of Sigma Aldrich
B3: 1,1,1-tris(hydroxymethyl)ethane of Sigma Aldrich

### Polymeric material

P1: EMA: Elvaloy® AC 12024S of Dupont
P2: Platamid® M1276 of Arkema
P3: Platamid® H2513 of Arkema
P4: Platamid® HX2544 of Arkema

### Matrix polymers

MP1: Queo® 0203 of Borealis

### Production Process:

Sb₂O₃ was added together with a polyol, polymeric material and matrix polymer to an extruder and extruded at a temperature of 160 °C. After extrusion, a test piece has been prepared at 220 °C that has been used for laser writing. Laser writing has been performed with a Nd:YAG laser (1064 nm), with a frequency of 28 kHz and a velocity of 2190 mm/sec.
The distance between the lines (hatch) was 0.076 mm. In the experiments where EMA was used, Sb₂O₃ and EMA were added to an extruder to prepare a blend. This blend was thereafter extruded together with a polyol, polymeric material and matrix polymer and formed into a test piece.

Processing of the laser markable compositions to testpieces (tags) has been performed by injection molding the compositions at a temperature of 220 °C for 22 seconds. The processing stability for all samples was very good. The color of the samples did not change during processing.
The thermal stability of the samples was tested by leaving the samples for 10 minutes at a temperature of 220 °C. The color of the samples did not change due to the thermal stability test.

### Laser marking results:

Laser marking result judged by visual inspection of the samples.
-- = very poor laser marking, contrast very low
- = poor laser marking, contrast low
+ = laser marking possible, contrast low
++ = laser marking possible, contrast reasonable
+++ = laser marking good, contrast reasonable
++++ = laser marking good, contrast good
+++++ = laser marking excellent dark, contrast excellent

### Test results:

**Table A**

| Example | Matrix polymer (wt%) | Metal oxide (wt%) | Polyol (wt%) | Polymeric Material (wt%) | Color after Laser marking |
|---|---|---|---|---|---|
| A (ref) | 98.02 | O1, 1.8 | | | -- |
| B (ref) | 98.02 | O1, 1.8 | B3, 0.18 | | -- |
| C (ref) | 98.02 | O1, 1.8 | B2, 0.18 | | -- |
| D (ref) | 98.02 | O1, 1.8 | B1, 0.18 | | -- |
| E (ref) | 97 | O1, 1.8 | | P2, 1.2 | - |
| F (ref) | 97 | O1, 1.8 | | P3, 1.2 | + |
| G (ref) | 97 | O1, 1.8 | | P4, 1.2 | - |
| 1 | 96.7 | O1, 1.8 | B3. 0.3 | P3, 1.2 | +++ |
| 2 | 96.7 | O1, 1.8 | B2, 0.3 | P3, 1.2 | ++++ |
| 3 | 96.7 | O1, 1.8 | B1, 0.3 | P3, 1.2 | +++ |
| 4 | 96.85 | O1, 1.8 | B2, 0.15 | P3, 1.2 | ++ |
| 5 | 96.4 | O1, 1.8 | B2, 0.6 | P3, 1.2 | +++++ |
| 6 | 97.53 | O1, 1.8 | B3, 0.23 | P1, 0.45 | +++ |
| 7 | 97.53 | O1, 1.8 | B2, 0.23 | P1, 0.45 | ++++ |
| 8 | 97.53 | O1, 1.8 | B1, 0.23 | P1, 0.45 | +++ |
| H (ref) | 96.854 | O1, 1.8 | | P4, 1.2 | ++ |
| | | O2,0.146 | | | |
| 9 | 96.854 | O1, 1.8 | B1, 0.23 | P4, 1.2 | +++++ |
| | | O2, 0.146 | | | |
| 10 | 96.854 | O1, 1.8 | B1, 0.23 | P4, 1.2 | +++++ |
| | | O3, 0.146 | | | |
| 11 | 96.854 | O1, 1.8 | B1, 0.23 | P4, 1.2 | +++++ |
| | | O4, 0.146 | | | |
| 12 | 96.854 | O1, 1.8 | B1, 0.23 | P4, 1.2 | +++++ |
| | | O5, 0.146 | | | |
| 13 | 96.854 | O1, 1.8 | B1, 0.23 | P4, 1.2 | ++++ |
| | | O6, 0.146 | | | |

The samples of the reference experiments A-G did not contain a polyol and/or a polymeric material. It was observed that with these samples a poor result was obtained after laser marking.
With the samples according to the invention, which included both a polyol and a polymeric material, very good results could be obtained after laser marking.

## Claims

1. A laser marking additive comprising:
a. A metal oxide comprising Sb,
b. A polyol and
c. A polymeric material.

2. Laser marking additive according to claim 1, wherein the metal oxide comprising Sb is antimony-trioxide (Sb₂O₃) or antimony-doped tin oxide.

3. Laser marking additive according to claim 1 or 2, wherein the polyol is monoethyleneglycol, diethyleneglycol, polyethylene glycol (PEG) or an alcohol comprising 3 or more hydroxyl groups.

4. Laser marking additive according to anyone of claims 1-3, wherein the polyol is chosen from the group of pentaerythritol, dipentaerythritol, 1,1,1-tris(hydroxymethyl) ethane, monoethyleneglycol, diethyleneglycol and polyethyleneglycol (PEG).

5. Laser marking additive according to claim 3 or 4, wherein the polyethyleneglycol has a weight average molecular weight (Mw) of 200-10,000.

6. Laser marking additive according to anyone of claims 1-5, wherein the polymeric material is polyamide, polyethylenemethylacrylate (EMA), polyethylenevinylacetate (EVA) or polybutyleneterephthalate (PBT).

7. Laser marking additive according to anyone of claims 1-6, wherein the polymeric material has a melting point between 40 and 120 °C.

8. Laser markable composition comprising:
5-99 wt% of a matrix polymer and 1-5 wt% of the laser marking additive according to any one of claims 1-6, based on the total weight of the lasermarking composition.

9. Laser markable composition according to claim 8, wherein the matrix polymer is a polyolefin, preferably ethylene or propylene homo- or copolymers.

10. Laser markable composition according to claim 8 or 9, wherein the amount of metal oxide in the laser markable composition ranges between 0.01 wt% to 5 wt%, preferably between 0.05 wt% to 3 wt%, or between 0.1 and 1 wt%.

11. Use of a laser markable composition according to anyone of claims 8-10 for the preparation of articles that can be marked by treating the article with laser light.
